# EUROPEAN PATENT SPECIFICATION

(11) **EP 2 816 645 B1**
(45) Date of publication and mention of the grant of the patent: **31.10.2018**
(21) Application number: 14172976.4
(22) Date of filing: 18.06.2014
(51) Int. Cl.: H01M 4/66, H01M 4/587, H01M 4/13, H01M 10/052, H01M 4/133, H01M 4/64, H01M 4/70, H01M 10/42

(54) **ENERGY STORAGE DEVICE AND ENERGY STORAGE MODULE**
ENERGIESPEICHERVORRICHTUNG UND ENERGIESPEICHERMODUL
DISPOSITIF DE STOCKAGE D'ÉNERGIE ET MODULE DE STOCKAGE D'ÉNERGIE

(30) Priority: 18.06.2013 JP 2013127744; 13.06.2014 JP 2014122574
(43) Date of publication of application: 24.12.2014
(73) Proprietor: GS Yuasa International Ltd., Kisshoin, Minami-ku, Kyoto-shi, Kyoto 601-8520 (JP)
(72) Inventor: NAKAI, Kenta, Kyoto, 601-8520 (JP); MIYAZAKI, Akihiko, Kyoto, 601-8520 (JP); KAKO, Tomonori, Kyoto, 601-8520 (JP); MORI, Sumio, Kyoto, 601-8520 (JP)
(74) Representative: Isarpatent

(56) References cited:
- EP-A1- 2 355 225
- EP-A1- 2 587 574
- US-A1- 2004 170 898

## Description

### FIELD

The present invention relates to an energy storage device and an energy storage module.

### BACKGROUND

In recent years, as power sources of vehicles such as automobiles and motorcycles, and various equipment such as mobile terminals and laptop personal computers, energy storage devices capable of being charged/discharged, for example, batteries such as a lithium ion battery and a nickel-metal hydride battery, and a capacitor such as an electric double layer capacitor, are employed. An electrode to be used for such an energy storage device is disclosed, for example, in JP-A-2011-258407 and JP-A-2010-135342.

JP-A-2011-258407 discloses a negative electrode for a lithium ion secondary battery having a negative active material layer containing a negative active material capable of absorbing and releasing lithium on the surface of a negative current collector made of a copper foil. JP-A-2011-258407 also discloses that the surface of the negative current collector has irregularities, and the surface having irregularities of the negative current collector has a maximum height Ry of 0.5 µm to 5.0 µm, and the local peaks of the surface having irregularities of the negative current collector have an average spacing S of 50% to 500% of the average particle diameter of the negative active material.

JP-A-2010-135342 discloses an electrode comprising a current collector including an active material layer-forming region having a ten-point mean roughness Rz of 1.8 µmor more and 10.0 µm or less and a smooth region having a ten-point mean roughness Rz of 1.7 µm or less, and an active material layer disposed at the active material layer-forming region of the current collector. An electrode lead is connected to the smooth region.

US 2004/0170898 A1 describes the use of a mixture of spherical carbonaceous materials having different average particle sizes as an anode active material in an anode composite mixture layer of an anode. The spherical carbonaceous material of large particle size decreases a reaction with non-aqueous electrolyte solution to suppress the decrease of a battery capacity, form clearances having suitable sizes in the anode composite mixture layer, and retain the non-aqueous electrolyte solution. The clearances in the anode composite mixture layer are filled with the carbonaceous material of small particle size while spaces capable of suitably retaining the non-aqueous electrolyte solution are left.

In EP 2 355 255 A1 a secondary particle and a lithium battery including the same are described. The secondary particle includes a plurality of primary particles and each primary particle contains polycyclic nano-sheets disposed upon one another. The polycyclic nano-sheets include hexagonal rings of six carbon atoms linked to each other. The secondary particle is used as a negative active material in the lithium battery.

Furthermore, EP 2 587 574 A1 describes a lithium ion secondary battery, which uses a negative electrode, wherein an active material is deposited on a collector and no wrinkles are formed on the collector. Specifically disclosed is an electrolytic copper foil for the lithium ion secondary battery, in which a surface-roughened layer of copper or copper alloy particles is formed on both surfaces of an untreated copper foil.

### SUMMARY

The present inventors have found that input power is largely reduced when batteries comprising electrodes disclosed in JP-A-2011-258407 and JP-A-2010-135342 are used at high temperatures.

In view of the above, it is an object of the present invention to provide an energy storage device which can suppress the reduction of input power in using at high temperatures.

The present inventors have made earnest investigations, and consequently found that the reduction of input power in using an energy storage device at high temperatures results from the particle diameter of the negative active material and the size of irregularities on the surface where the active material in the negative substrate is located. Then, the present inventors have made earnest investigations in order to suppress the reduction of input power in using the energy storage device at high temperatures, and consequently found that the reduction of input power can be controlled by the parameters of 10% cumulative diameter D10 and 90% cumulative diameter D90 in the particle size distribution of the negative active material on a volume basis, the center line roughness Ra of the surface of a negative substrate, and the center line roughness Ra to a ten-point mean height Rz on the surface of a negative substrate.

The energy storage device according to a first aspect of the present invention comprises a negative electrode including a negative substrate having a surface, and a negative composite layer formed on the surface of the negative substrate and including a negative active material, a positive electrode including a positive substrate, and a positive composite layer formed on the positive substrate and including a positive active material, and a separator placed between the positive electrode and the negative electrode. 10% cumulative diameter D10 in the particle size distribution of the negative active material on a volume basis is 1.3 µm or more, and 90% cumulative diameter D90 in the particle size distribution of the negative active material on a volume basis is 8.9 µm or less. The surface of the negative substrate has a center line roughness Ra of 0.205 µm or more and 0.781 µm or less, and has a center line roughness Ra to a ten-point mean height Rz of 0.072 or more and 0.100 or less.

### BRIEF DESCRIPTION OF THE DRAWINGS

Fig. 1 is an enlarged schematic cross-sectional view showing a cross-sectional diagram of a negative electrode of an energy storage device in Embodiment 1 of the present invention;
Fig. 2 is a perspective view schematically showing a nonaqueous electrolyte secondary battery which is one example of an energy storage device in Embodiment 1 of the present invention;
Fig. 3 is a perspective view schematically showing the inside of a container for a nonaqueous electrolyte secondary battery in Embodiment 1 of the present invention;
Fig. 4 is a schematic view showing a power generating element constituting a nonaqueous electrolyte secondary battery in Embodiment 1 of the present invention;
Fig. 5 is an enlarged schematic cross-sectional view showing a cross-sectional diagram of a positive electrode constituting a power generating element in Embodiment 1 of the present invention;
Fig. 6 is an enlarged cross-sectional schematic view showing a cross-sectional diagram of a separator constituting a power generating element in Embodiment 1 of the present invention; and
Fig. 7 is a schematic view showing a storage battery system in Embodiment 2 and a state of mounting the system on a vehicle.

### DETAILED DESCRIPTION

The energy storage device according to the first aspect of the present invention comprises a negative electrode including a negative substrate having a surface, and a negative composite layer formed on the surface of the negative substrate and including a negative active material, a positive electrode including a positive substrate, and a positive composite layer formed on the positive substrate and including a positive active material, and a separator placed between the positive electrode and the negative electrode. 10% cumulative diameter D10 in the particle size distribution of the negative active material on a volume basis is 1.3 µm or more, and 90% cumulative diameter D90 in the particle size distribution of the negative active material on a volume basis is 8.9 µm or less. The surface of the negative substrate has a center line roughness Ra of 0.205 µm or more and 0.781 µm or less, and has a center line roughness Ra to a ten-point mean height Rz of 0.072 or more and 0.100 or less.

The present inventors have made earnest investigations, and consequently found that by setting the parameters of the 10% cumulative diameter D10 and 90% cumulative diameter D90 in the particle size distribution of the negative active material on a volume basis, the center line roughness Ra of the surface of the negative substrate, and the center line roughness Ra to the ten-point mean height Rz on the surface of the negative substrate within the above-described ranges, the reduction of input power can be suppressed when the energy storage device according to the first aspect of the present invention is used at high temperatures. Accordingly, the first aspect of the present invention can provide an energy storage device which can suppress the reduction of input power in using at high temperatures.

The center line roughness Ra is preferably 0.291 µm or more and 0.594 µm or less. The center line roughness Ra is more pereferably 0.323 µm or more and 0.514 µm or less.

The center line roughness Ra to the ten-point mean height Rz (Ra/Rz) is preferably 0.081 or more and 0.089 or less. The center line roughness Ra to the ten-point mean height Rz (Ra/Rz) is more preferably 0.083 or more and 0.086 or less.

The 10% cumulative diameter D10 in the particle size distribution of the negative active material on a volume basis may be 1.3 µm or more, and the 90% cumulative diameter D90 in the particle size distribution of the negative active material on a volume basis may be 4.5 µm or less. The 10% cumulative diameter D10 in the particle size distribution of the negative active material on a volume basis may be 1.6 µm or more, and the 90% cumulative diameter D90 in the particle size distribution of the negative active material on a volume basis may be 3.6 µm or less.

In the energy storage device according to the first aspect of the present invention, the negative active material preferably contains hard carbon. Since the hard carbon is an active material having relatively small expansion and contraction during charge and discharge, the hard carbon can further suppress the reduction of input power in using at high temperatures.

In the energy storage device according to the first aspect of the present invention, the 10% cumulative diameter D10 in the particle size distribution of the negative active material on a volume basis is preferably 8.9 µm or less. The 10% cumulative diameter D10 in the particle size distribution of the negative active material on a volume basis is more preferably 4.3 µm or less.

The 90% cumulative diameter D90 in the particle size distribution of the negative active material on a volume basis is preferably 1.3 µm or more. The 90% cumulative diameter D90 in the particle size distribution of the negative active material on a volume basis is more preferably 3.6 µm or more.

A second aspect of the present invention is an energy storage module including the energy storage device according to the first aspect of the present invention.

As described above, the aspects of the present invention can provide an energy storage device which can suppress the reduction of input power in using at high temperatures.

Hereinafter, embodiments of the present invention will be described based on drawings. Incidentally, in the following drawings, the same or corresponding parts are designated by the same reference signs, and the descriptions thereof are omitted.

### Embodiment 1

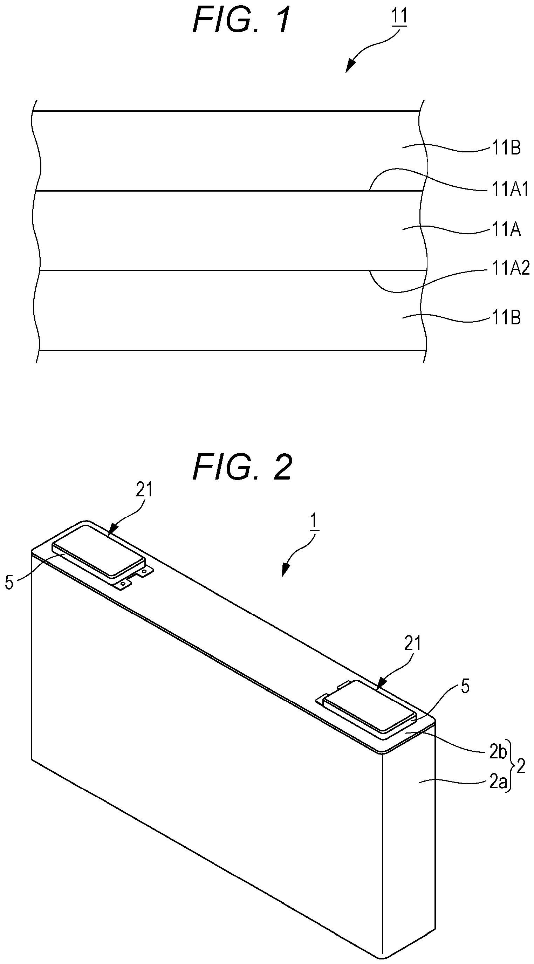

A nonaqueous electrolyte secondary battery 1, which is one example of an energy storage device of an embodiment of the present invention, will be described with reference to Fig. 1 to Fig. 6. The nonaqueous electrolyte secondary battery 1 is preferably a battery for vehicle installation, and more preferably a battery for a hybrid vehicle.

The nonaqueous electrolyte secondary battery 1 includes a negative electrode 11, a positive electrode 13 and a separator 12 placed between the negative electrode 11 and the positive electrode 13. First, the negative electrode 11 will be described in detail.

As shown in Fig. 1, the negative electrode 11 includes a negative current collecting foil 11A and a negative composite layer 11B formed on the negative current collecting foil 11A. The negative current collecting foil 11A has a surface 11A1 and a rear surface 11A2 opposite to the surface 11A1.

At least one of the surface 11A1 and the rear surface 11A2 of the negative current collecting foil 11A has a center line roughness Ra of 0.205 µm or more and 0.781 µm or less, preferably 0.291 µm or more and 0.594 µm or less, and more preferably 0.323 µm or more and 0.514 µm or less.

At least one of the surface 11A1 and the rear surface 11A2 of the negative current collecting foil 11A has a center line roughness Ra to a ten-point mean height Rz (Ra/Rz) of 0.072 or more and 0.100 or less, preferably 0.081 or more and 0.089 or less, and more preferably 0.083 or more and 0.086 or less.

Herein, the center line roughness Ra and the ten-point mean height Rz of the surface 11A1 and the rear surface 11A2 of the negative current collecting foil 11A are values measured in accordance with JIS B 0601-1994. The center line roughness Ra to the ten-point mean height Rz (Ra/Rz) is a value obtained by dividing the center line roughness Ra (unit: µm) by the ten-point mean height Rz (unit: µm).

In order to adjust the center line roughness Ra, the ten-point mean height Rz and the center line roughness Ra to the ten-point mean height Rz (Ra/Rz) of the surface 11A1 and the rear surface 11A2 of the negative current collecting foil 11A, it is necessary to roughen the surface 11A1 and the rear surface 11A2 of the negative current collecting foil 11A. The method of roughening the surface 11A1 and the rear surface 11A2 of the negative current collecting foil 11A is not particularly limited. Examples thereof include methods of roughening the surface 11A1 and the rear surface 11A2 of the negative current collecting foil 11A by scrubbing these surfaces with an abrasive paper, using blasting such as sand blast, pressing these surfaces with a roughened press roll. Pressing these surfaces with a roughened press roll after forming a negative composite layer 11B on the surface 11A1 and the rear surface 11A2 of the negative current collecting foil 11A may be used. methods of roughening the surfaces by chemical etching with an acid or physical etching with ion collision may be used. These methods may be employed singly, or may be employed in combination of two or more thereof.

The present embodiment is described with reference to a negative current collecting foil as the negative substrate, but the negative substrate is not limited to the shape of a foil in the present invention.

The negative composite layer 11B includes a negative active material and a binder. Incidentally, the negative composite layer 11B may further include a conductive additive.

The 10% cumulative diameter D10 in the particle size distribution of the negative active material on a volume basis is 1.3 µm or more, and the 90% cumulative diameter D90 in the particle size distribution of the negative active material on a volume basis is 8.9 µm or less. It is preferred that the D10 in the negative active material is 1.3 µm or more, and the D90 in the negative active material is 4.5 µm or less. It is more preferred that the D10 in the negative active material is 1.6 µm or more, and the D90 in the negative active material is 3.6 µm or less.

Herein, the D10 indicates a particle diameter corresponding to a volume of 10% on a volumetric distribution of particles measured by laser diffraction and scattering method, and the D90 indicates a particle diameter corresponding to a volume of 90% on a volumetric distribution of particles measured by laser diffraction and scattering method.

In order to adjust the D10 and the D90, it is necessary to classify the active material as required. The method of classifying the active material is not particularly limited, and for example, a sieve may be used, or a pneumatic classifier or the like may be used.

The negative active material contains hard carbon, and is preferably composed of hard carbon. When the negative active material contains substances other than the hard carbon, examples of the substances other than the hard carbon include carbon materials; other elements, alloys, metal oxides, metal sulfides and metal nitrides which can be alloyed with lithium; and the like. Examples of the carbon materials include, in addition to hard carbon, soft carbon, graphite and the like. Examples of the elements which can be alloyed with lithium can include Al, Si, Zn, Ge, Cd, Sn, Pb and the like. These elements may be contained singly or may be contained in combination of two or more thereof. Examples of the alloys include alloys containing a transition metal element such as a Ni-Si alloy and a Ti-Si alloy; and the like. Examples of the metal oxides include amorphous tin oxides such as SnB_{0.4}P_{0.6}O_{3.1}; tin-silicon oxides such as SnSiO₃; silicon oxides such as SiO; lithium titanate having a spinel structure such as Li₄₊ₓTi₅O₁₂; and the like. Examples of the metal sulfides include lithium sulfide such as LiS₂; molybdenum sulfide such as MoS₂; iron sulfides such as FeS, FeS₂, LiₓFeS₂; and the like. Among these compounds, hard carbon is particularly preferred, and above all hard carbon having a particle diameter D50 smaller than 8 µm is preferred.

The binder is not particularly limited, and examples thereof can include polyacrylonitrile, polyvinylidene fluoride (PVDF), a copolymer of vinylidene fluoride and hexafluoropropylene, polytetrafluoroethylene, polyhexafluoropropylene, polyethylene oxide, polypropylene oxide, polyphosphazene, polysiloxane, polyvinyl acetate, polyvinyl alcohol, polymethyl methacrylate, polyacrylic acid, polymethacrylic acid, styrene-butadiene rubber, nitrile-butadiene rubber, polystyrene, polycarbonate, and the like. Particularly, from the viewpoint of electrochemical stability, the binder is preferably at least one of polyacrylonitrile, polyvinylidene fluoride, polyhexafluoropropylene and polyethylene oxide, and more preferably at least one of PVDF, polyacrylic acid, polymethacrylic acid and styrene-butadiene rubber.

In the present embodiment, the negative composite layer 11B is formed on each of the surface 11A1 and the rear surface 11A2 of the negative current collecting foil 11A, but the present invention is not particularly limited to this structure. For example, the negative composite layer 11B may be formed on only the surface 11A1 of the negative current collecting foil 11A. However, the surface on which the negative composite layer 11B is formed has a center line roughness Ra of 0.205 µm or more and 0.781 µm or less, and has a center line roughness Ra to a ten-point mean height Rz of 0.072 or more and 0.100 or less.

Subsequently, a method for producing a negative electrode for a nonaqueous electrolyte secondary battery in the present embodiment will be described.

First, a negative active material, in which the 10% cumulative diameter D10 in the particle size distribution on a volume basis is 1.3 µm or more and the 90% cumulative diameter D90 in the particle size distribution on a volume basis is 8.9 µm or less, is prepared. This step is performed, for example, by passing, through a sieve with an opening of 10 µm, an active material in which minimum particle diameter Dmin in the particle size distribution on a volume basis is 1 µm or less and maximum particle diameter Dmax in the particle size distribution on a volume basis is 10 µm or more multiple times.

Further, the negative current collecting foil 11A, as a negative substrate, having the surface 11A1 (the surface 11A1 and the rear surface 11A2 in the present embodiment) having a center line roughness Ra of 0.205 µm or more and 0.781 µm or less, and a center line roughness Ra to a ten-point mean height Rz of 0.072 or more and 0.100 or less is prepared.

In this step, for example, the surface 11A1 having the center line roughness Ra and the ten-point mean height Rz described above is formed in the following manner. For example, the surface of the negative current collecting foil 11A is subjected to etching. Further, for example, the surface of the negative current collecting foil 11A is pressed by using a roughened roll. Further, for example, the negative composite layer 11B is formed on the surface of the negative current collecting foil 11A, and then the resultant is pressed by using a roughened roll. In this case, when hard carbon is used as the negative active material, the press linear pressure is, for example, 19 to 157 kgf/mm, and when a material other than hard carbon is used as the negative active material, the press linear pressure is, for example, 11 to 221 kgf/mm.

Then, the negative active material and a binder are mixed, and the resulting mixture is added to a solvent, followed by kneading, to form a negative composite. The negative composite is applied onto at least the surface 11A1 (the surface 11A1 and the rear surface 11A2 in the present embodiment) of the negative current collecting foil 11A, dried, and then subjected to compression forming. Accordingly, the negative electrode 11 in which the negative composite layer 11B is formed on the surface 11A1 of the negative current collecting foil 11A is produced. Incidentally, vacuum-drying is performed after compression forming.

As described above, the negative electrode 11 for a nonaqueous electrolyte secondary battery in the present embodiment includes the negative current collecting foil 11A, as a negative substrate, having the surface 11A1, and the negative composite layer 11B formed on the surface 11A1 of the negative current collecting foil 11A and having the negative active material. In the negative electrode 11, the 10% cumulative diameter D10 in the particle size distribution of the negative active material on a volume basis is 1.3 µm or more, and the 90% cumulative diameter D90 in the particle size distribution of the negative active material on a volume basis is 8.9 µm or less, and the surface 11A1 of the negative current collecting foil 11A has a center line roughness Ra of 0.205 µm or more and 0.781 µm or less and a center line roughness Ra to a ten-point mean height Rz of 0.072 or more and 0.100 or less.

According to the negative electrode 11 for a nonaqueous electrolyte secondary battery in the present embodiment, it is possible to attain high input power performance since an active material having a relatively small particle diameter can be used by setting the D10 and D90 of the negative active material within the above-described ranges.

A depressed portion of the surface 11A1 can be specified to a size suitable for the particle diameter of the negative active material by adjusting the center line roughness Ra on the surface 11A1 of the negative current collecting foil 11A to the above-mentioned range. Since depressed portions of the surface 11A1 can be formed to have various sizes suitable for the particle diameter of the negative active material particle by adjusting the center line roughness Ra to the ten-point mean height Rz (Ra/Rz) on the surface 11A1 of the negative current collecting foil 11A to the above-mentioned range, portion or all of the negative active material can be incorporated into depressed portions having various sizes. This makes it possible to enhance adhesion properties (retention power) between the active material particles and the negative current collecting foil 11A.

Accordingly, even when a nonaqueous electrolyte secondary battery using the negative electrode 11 for a nonaqueous electrolyte secondary battery in the present embodiment is used at high temperatures, it is possible to suppress the reduction of input power by improving the adhesion properties (retention power).

As described above, since the negative electrode 11 for a nonaqueous electrolyte secondary battery in the present embodiment can suppress the reduction of input power in using at high temperatures, the negative electrode 11 is suitably used for vehicle installation, and more suitably used for hybrid vehicles or electric vehicles.

Subsequently, the nonaqueous electrolyte secondary battery 1, which is one example of an energy storage device of an embodiment of the present invention, will be described in more detail.

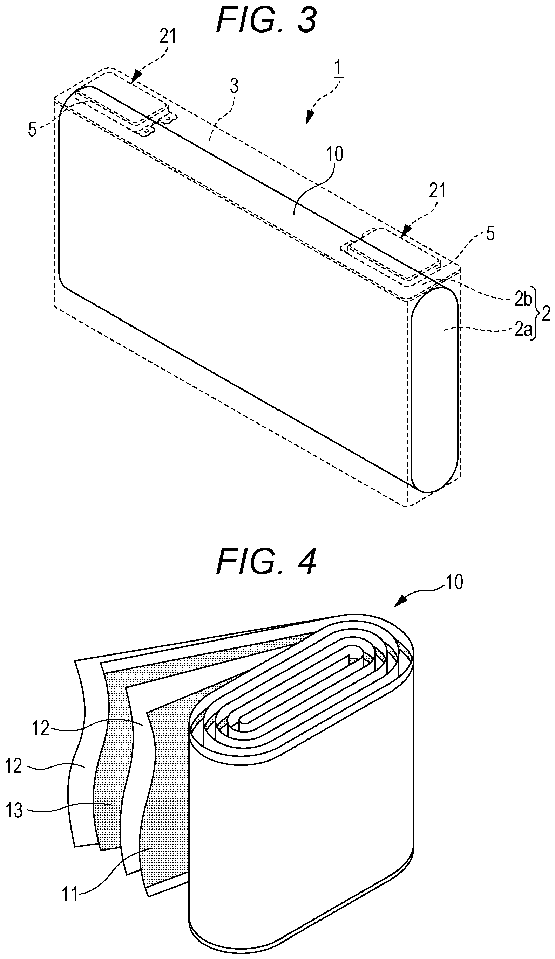

As shown in Fig. 2 and Fig. 3, the nonaqueous electrolyte secondary battery 1 of the present embodiment includes a container 2, an electrolyte solution 3 contained in the container 2, an external gasket 5 attached to the container 2, a power generating element 10 housed in the container 2, and an external terminal 21 electrically connected to the power generating element 10.

As shown in Fig. 2, the container 2 has a main body (case) 2a housing the power generating element 10 and a lid portion 2b covering the main body 2a. The main body 2a and the lid portion 2b are formed of, for example, a stainless steel sheet, and welded to each other.

The external gasket 5 is placed at the outer surface of the lid portion 2b, and the opening of the lid portion 2b is communicated with the opening of the external gasket 5. The external gasket 5 has, for example, a depressed portion, and an external terminal 21 is placed in the depressed portion.

As shown in Fig. 3, the external terminal 21 is connected to a current collecting portion connected to the power generating element 10. Incidentally, the shape of the current collecting portion is not particularly limited, and for example, a plate-shape is used. The external terminal 21 is formed of an aluminum-based metal material such as aluminum or aluminum alloys.

The external gasket 5 and the external terminal 21 are respectively provided for a positive electrode and for a negative electrode. The external gasket 5 for a positive electrode and the external terminal 21 for a positive electrode are placed at one end in the longitudinal direction of the lid portion 2b, and the external gasket 5 for a negative electrode and the external terminal 21 for a negative electrode are placed at the other end in the longitudinal direction of the lid portion 2b.

As shown in Fig. 3, the electrolyte solution 3 is contained in the main body 2a, and the power generating element 10 is immersed into the electrolyte solution 3. In the electrolyte solution 3, an electrolyte is dissolved in an organic solvent. Examples of the organic solvent include ester-based solvents such as propylene carbonate (PC), ethylene carbonate (EC), dimethyl carbonate (DMC), and ethylmethyl carbonate (EMC); organic solvents formed by blending ester-based solvents with ether-based solvents such as γ-butyrolactone (γ-BL) and diethoxyethane (DEE); and the like. Further, examples of the electrolyte include lithium salts such as lithium perchlorate (LiClO₄), lithium borofluoride (LiBF₄), and lithium hexafluorophosphate (LiPF₆); and the like.

The power generating element (electrode body) 10 is contained in the main body 2a. One power generating element may be contained in the container 2, or a plurality of power generating elements may be contained in the container 2 (not shown). In the latter case, the plurality of the power generating elements 10 are electrically connected in parallel.

As shown in Fig. 4, the power generating elements 10 includes the negative electrode 11, the separator 12 and the positive electrode 13. The power generating element 10 is formed by placing the separator 12 on the negative electrode 11, placing the positive electrode 13 on the separator 12, placing the separator 12 on the positive electrode 13, and winding these in this state to be formed into a cylindrical shape. That is, in the power generating element 10, the separator 12 is formed on the outer periphery of the negative electrode 11, the positive electrode 13 is formed on the outer periphery of the separator 12, and the separator 12 is formed on the outer periphery of the positive electrode 13. In the present embodiment, since an insulating separator is placed between the negative electrode 11 and the positive electrode 13 in the power generating element 10, the negative electrode 11 is not electrically connected to the positive electrode 13.

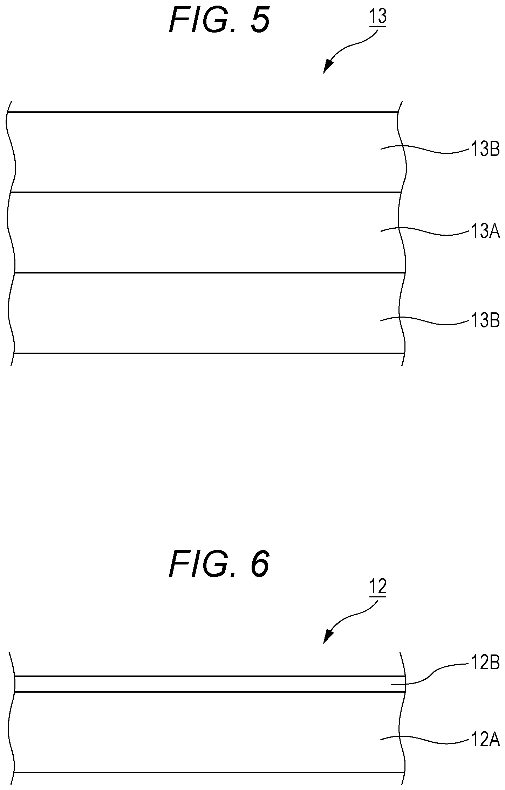

As shown in Fig. 5, the positive electrode 13 constituting the power generating element 10 includes a positive current collecting foil 13A and a positive composite layer 13B formed on the positive current collecting foil 13A. In the present embodiment, the positive composite layer 13B is formed on each of the surface and the rear surface of the positive current collecting foil 13A, but the present invention is not particularly limited to this structure. For example, the positive composite layer 13B may be formed on the surface or the rear surface of the positive current collecting foil 13A. However, the negative composite layer 11B faces the positive composite layer 13B.

The present embodiment is described with reference to a positive current collecting foil as the positive substrate, but the positive substrate in the present invention is not limited to the shape of a foil.

The positive composite layer 13B includes a positive active material, a conductive additive and a binder. The binder contained in the positive composite layer 13B is not particularly limited, and a binder similar to that contained in the negative composite layer 11B can be used.

The positive active material is not particularly limited, but lithium composite oxides are preferred. Among the lithium composite oxides, a lithium composite oxide represented by LiₐNi_{b}M1_{c}M2_{d}WₓNb_{y}Zr_{z}O₂ (wherein, a, b, c, d, x, y, and z satisfy the relationships of 0 ≤ a ≤ 1.2, 0 ≤ b ≤ 1, 0 ≤ c ≤ 0.5, 0 ≤ d ≤ 0.5, 0 ≤ x ≤ 0.1, 0 ≤ y ≤ 0.1, 0 ≤ z ≤ 0.1, and b + c + d = 1, and M1 and M2 are respectively at least one element selected from the group consisting of Mn, Ti, Cr, Fe, Co, Cu, Zn, Al, Ge, Sn and Mg) is more preferred.

The conductive additive is not particularly limited, and for example, acetylene black can be used.

The separator 12 is placed between the negative electrode 11 and the positive electrode 13, and allows the electrolyte solution 3 to pass while preventing electrical connection between the negative electrode 11 and the positive electrode 13. The material of the separator 12 is not particularly limited, and for example, a porous membrane made of a polyolefin resin such as polyethylene is used. Such a porous membrane may contain an additive such as a plasticizer, an antioxidant, or a flame retarder.

The separator 12 may be a monolayer, or may include a substrate 12A and an inorganic layer 12B formed on one side of the substrate 12A, as shown in Fig. 6. In this case, the substrate 12A is not particularly limited, and resin porous membranes in general can be used, and for example, polymers, natural fibers, hydrocarbon fibers, a cloth of glass fibers or ceramic fibers, or non-woven fibers can be used. The inorganic layer 12B is also referred to as an inorganic coating layer, and contains inorganic particles, a binder and the like.

The present embodiment is described with reference to a nonaqueous electrolyte secondary battery as the energy storage device, but the present invention is not limited to the nonaqueous electrolyte secondary battery, and can be applied to, for example, a capacitor. When the present invention is applied to the nonaqueous electrolyte secondary battery, the energy storage device is suitably a lithium ion secondary battery. When the present invention is applied to the capacitor, the energy storage device is suitably a lithium ion capacitor or an ultracapacitor.

Subsequently, a method for producing the nonaqueous electrolyte secondary battery 1 in the present embodiment will be described.

First, the power generating element 10 will be described.

The negative electrode 11 is prepared according to a method for producing a negative electrode for a nonaqueous electrolyte secondary battery in the embodiment.

The positive electrode 13 is prepared in the following manner. A positive active material, a conductive additive and a binder are mixed, and the resulting mixture is added to a solvent, followed by kneading, to form a positive composite. The positive composite is applied onto at least one surface of the positive current collecting foil 13A, dried, and then subjected to compression forming. Accordingly, the positive electrode 13 in which the positive composite layer 13B is formed on the positive current collecting foil 13A is produced. Vacuum-drying is performed after compression forming.

Further, the separator 12 is prepared. This step is not particularly limited, and for example, when the substrate 12A is produced, and at the same time, a coating agent is applied onto the substrate 12A, and thus, the inorganic layer 12B is produced.

Next, the negative electrode 11 and the positive electrode 13 are wound with the separator 12 interposed therebetween. At this time, the inorganic layer 12B of the separator 12 is preferably opposed to the positive electrode 13. Accordingly, the power generating element 10 is produced. Thereafter, current collecting portions are respectively attached to the negative electrode 11 and the positive electrode 13.

Next, the power generating element 10 is placed in the main body 2a of the container 2. When a plurality of the power generating elements 10 are used, for example, the power generating elements 10 are placed in the main body 2a with the current collecting portions of the power generating elements 10 being electrically connected in parallel. Then, the current collecting portions are respectively welded to the external terminals 21 in the external gaskets 5 of the lid portion 2b, and the lid portion 2b is attached to the main body 2a.

Then, an electrolyte solution is injected. The electrolyte solution is not particularly limited, and for example, the electrolyte solution is prepared by dissolving LiPF₆ in a mixed solvent of propylene carbonate (PC), dimethyl carbonate (DMC) and ethylmethyl carbonate (EMC) in a volume ratio of 3 : 4 : 3. However, a publicly known additive may be further added. By undergoing the above-mentioned steps, the nonaqueous electrolyte secondary battery 1 in the present embodiment shown in Figs. 1 to 6 is produced.

As described above, the nonaqueous electrolyte secondary battery 1, which is one example of an energy storage device in the present embodiment, includes the negative electrode 11 for a nonaqueous electrolyte secondary battery described above, the positive electrode 13 containing the positive current collecting foil 13A as the positive substrate and the positive composite layer 13B formed on the positive current collecting foil 13A and having a positive active material, and the separator placed between the positive electrode 13 and the negative electrode 11.

The nonaqueous electrolyte secondary battery 1 according to the embodiment of the present invention includes the negative electrode 11 in which the parameters of the D10 and D90 of the negative active material, the center line roughness Ra of the surface 11A1 of the negative current collecting foil 11A as the negative substrate, and the center line roughness Ra to the ten-point mean height Rz on the surface 11A1 of the negative current collecting foil 11A are controlled, and thus, the reduction of input power can be suppressed in using at high temperatures.

### Embodiment 2

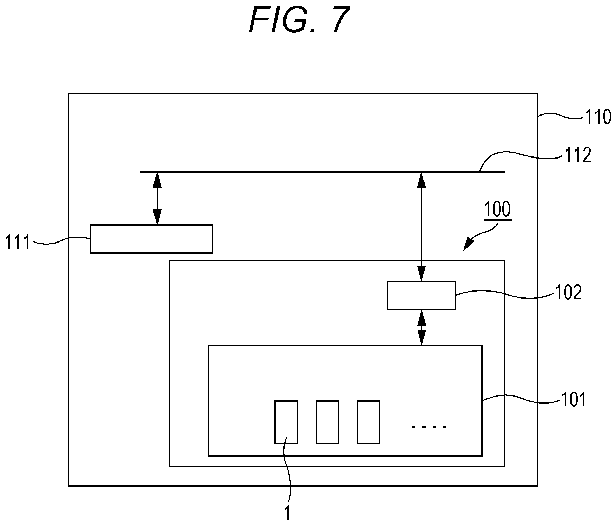

As shown in Fig. 7, a storage battery system 100 for vehicle installation in the embodiment 2 includes the nonaqueous electrolyte secondary battery 1 as the energy storage device of the embodiment 1, and a control portion 102 for controlling the charge-discharge of the nonaqueous electrolyte secondary battery 1. Specifically, the storage battery system 100 for vehicle installation includes a storage battery module 101 having a plurality of the nonaqueous electrolyte secondary batteries 1, and the control portion 102 for performing the charge-discharge of the nonaqueous electrolyte secondary battery at a high rate and controlling the charge-discharge of the nonaqueous electrolyte secondary battery.

When the storage battery system 100 for vehicle installation is mounted on a vehicle 110, as shown in Fig. 7, the control portion 102 is connected to a vehicle control device 111 controlling an engine, a motor, a drive system and an electric parts system through a communication network 112 for vehicle installation such as on-vehicle LAN and CAN. The control portion 102 is communicated with the vehicle control device 111, and the storage battery system 100 is controlled based on information obtained from this communication. This can realize a vehicle including the storage battery system 100.

As described above, the storage battery system for vehicle installation of the reference embodiment includes the nonaqueous electrolyte secondary battery 1 as the energy storage device of the embodiment, and the control portion 102 for controlling the charge-discharge of the nonaqueous electrolyte secondary battery 1.

The storage battery system 100 for vehicle installation of the reference embodiment includes an energy storage device which can suppress the reduction of input power in using at high temperatures. Accordingly, the storage battery system 100 for vehicle installation can suppress the reduction of input power in using at high temperatures.

### Examples

In the present example, the effect of the fact that the D10 of the negative active material is 1.3 µm or more, the D90 of the negative active material is 8.9 µm or less, and the surface of the negative substrate has a center line roughness Ra of 0.205 µm or more and 0.781 µm or less and a center line roughness Ra to a ten-point mean height Rz of 0.072 or more and 0.100 or less was investigated.

First, the measurement methods of various values in examples and comparative examples will be described below. Incidentally, parts of measurement objects are not specified, but it is desirable to cut, for example, a portion around the central area from the negative electrode to be measured. Moreover, it is desirable to cut portions at a plurality of locations which are statistically reliable as the number of samples. Further, the parts of object are preferably opposed to the positive electrode.

### (Measurement of Particle Diameter of Negative Active Material)

The volumetric distribution of particles was measured by a laser diffraction and scattering method. The particle diameter at which the cumulative amount of particles reached 10% was referred to as 10% cumulative diameter D10, and the particle diameter at which a cumulative amount of particles reached 90% was referred to as 90% cumulative diameter D90.

### (Measurement of Center Line Roughness Ra on Surface of Negative Substrate)

The negative composite layer was removed from the negative electrode by ultrasonic washing of the negative electrode. The center line roughness Ra on the surface (the surface on which the negative composite layer had been formed) of the negative substrate was measured with a laser microscope in accordance with JIS B 0601-1994.

### (Measurement of Center Line Roughness Ra to Ten-point Mean Height Rz (Ra/Rz) on Surface of Negative Substrate)

The ten-point mean height Rz on the surface (the surface on which the negative composite layer had been formed) of the negative substrate, which is obtained in the same manner as described above, was measured with a laser microscope in accordance with JIS B 0601-1994. Ra/Rz was calculated from the obtained center line roughness Ra and the ten-point mean height Rz.

### (Negative Active Materials A1 to A6)

Negative active materials, in which the 10% cumulative diameter D10 in the particle size distribution on a volume basis and the 90% cumulative diameter D90 in the particle size distribution on a volume basis were as shown in Table 1 below, were prepared. The negative active material was hard carbon.

**[Table 1]**

| Active Material No. | D10 [µm] | D90 [µm] |
|---|---|---|
| A1 | 0.5 | 5.1 |
| A2 | 1.2 | 4.5 |
| A3 | 1.6 | 3.6 |
| A4 | 3.5 | 10.8 |
| A5 | 3.1 | 8.9 |
| A6 | 4.3 | 6.2 |

### (Examples 1 to 24 and Comparative Examples 1 to 40)

Lithium ion secondary batteries of Examples 1 to 24 and Comparative Examples 1 to 40 were produced as follows by using any one of the negative active materials A1 to A6.

### <Negative Electrodes 1 to 12>

The negative active material A1 described in Table 1 and PVDF as a binder were mixed in a ratio of 93 : 7, and to the resulting mixture, N-methylpyrrolidone (NMP) as a solvent was added to form a negative composite. The negative composite was applied onto a negative substrate of a Cu foil having a thickness of 8 µm. The negative substrate on which the negative composite was applied was pressed with a roll press machine having a roughened roll to perform compression forming of the negative composite layer and roughening of the negative current collecting foil. Water content was removed by vacuum-drying to form an electrode. A roll having a center line roughness Ra of 0.342 µm and a ten-point mean height Rz of 4.5 µm on the surface thereof was used, and the obtained electrodes, pressed at press linear pressures of 19, 35, 40, 50, 86, 117 and 129 kgf/mm, respectively, were designated as a negative electrode 1, a negative electrode 4, a negative electrode 5, a negative electrode 6, a negative electrode 9, a negative electrode11 and a negative electrode 12, respectively. A roll having a center line roughness Ra of 0.245 µm and a ten-point mean height Rz of 3.9 µm on the surface thereof was used, and the obtained electrodes, pressed at press linear pressures of 42, 48 and 87 kgf/mm, respectively, were designated as a negative electrode 2, a negative electrode 3 and a negative electrode 10, respectively. Further, a roll having a center line roughness Ra of 0.301 µm and a ten-point mean height Rz of 3.2 µm on the surface thereof was used, and the obtained electrodes, pressed at press linear pressures of 71 and 81 kgf/mm, respectively, were designated as a negative electrode 7 and a negative electrode 8, respectively.

### <Negative Electrodes 13 to 24>

The negative active material A2 described in Table 1 and PVDF as a binder were mixed in a ratio of 93 : 7, and to the resulting mixture, N-methylpyrrolidone (NMP) as a solvent was added to form a negative composite. The negative composite was applied onto a negative substrate of a Cu foil having a thickness of 8 µm. The negative substrate on which the negative composite was applied was pressed with a roll press machine having a roughened roll to perform compression forming of the negative composite layer and roughening of the negative current collecting foil. Water content was removed by vacuum-drying to form an electrode. A roll having a center line roughness Ra of 0.187 µm and a ten-point mean height Rz of 2.7 µm on the surface thereof was used, and the obtained electrodes, pressed at press linear pressures of 46, 61, 66, 76, 112, 143 and 156 kgf/mm, respectively, were designated as a negative electrode 13, a negative electrode 16, a negative electrode 17, a negative electrode 18, a negative electrode 21, a negative electrode23 and a negative electrode 24, respectively. A roll having a center line roughness Ra of 0.143 µm and a ten-point mean height Rz of 2.3 µm on the surface thereof was used, and the obtained electrodes, pressed at press linear pressures of 61, 66 and 106 kgf/mm, respectively, were designated as a negative electrode 14, a negative electrode 15 and a negative electrode 22, respectively. Further, a roll having a center line roughness Ra of 0.157 µm and a ten-point mean height Rz of 1.9 µm on the surface thereof was used, and the obtained electrodes, pressed at press linear pressures of 94 and 105 kgf/mm, respectively, were designated as a negative electrode 19 and a negative electrode 20, respectively.

### <Negative Electrodes 25 to 36>

The negative active material A3 described in Table 1 and PVDF as a binder were mixed in a ratio of 93 : 7, and to the resulting mixture, N-methylpyrrolidone (NMP) as a solvent was added to form a negative composite. The negative composite was applied onto a negative substrate of a Cu foil having a thickness of 8 µm. The negative substrate on which the negative composite was applied was pressed with a roll press machine having a roughened roll to perform compression forming of the negative composite layer and roughening of the negative current collecting foil. Water content was removed by vacuum-drying to form an electrode. A roll having a center line roughness Ra of 0.221 µm and a ten-point mean height Rz of 2.7 µm on the surface thereof was used, and the obtained electrodes, pressed at press linear pressures of 46, 61, 66, 76, 112, 143 and 156 kgf/mm, respectively, were designated as a negative electrode 25, a negative electrode 28, a negative electrode 29, a negative electrode 30, a negative electrode 33, a negative electrode35 and a negative electrode 36, respectively. A roll having a center line roughness Ra of 0.150 µm and a ten-point mean height Rz of 2.2 µm on the surface thereof was used, and the obtained electrodes, pressed at press linear pressures of 61, 66 and 106 kgf/mm, respectively, were designated as a negative electrode 26, a negative electrode 27 and a negative electrode 34, respectively. Further, a roll having a center line roughness Ra of 0.184 µm and a ten-point mean height Rz of 1.9 µm on the surface thereof was used, and the obtained electrodes, pressed at press linear pressures of 94 and 104 kgf/mm, respectively, were designated as a negative electrode 31 and a negative electrode 32, respectively.

### <Negative Electrodes 37, 39, 43, 48>

The negative active material A4 described in Table 1 and PVDF as a binder were mixed in a ratio of 93 : 7, and to the resulting mixture, N-methylpyrrolidone (NMP) as a solvent was added to form a negative composite. The negative composite was applied onto a negative substrate of a Cu foil having a thickness of 8 µm. The negative substrate on which the negative composite was applied was pressed with a roll press machine having a roughened roll to perform compression forming of the negative composite layer and roughening of the negative current collecting foil. Water content was removed by vacuum-drying to form an electrode. A roll having a center line roughness Ra of 0.214 µm and a ten-point mean height Rz of 2.7 µm on the surface thereof was used, and the obtained electrodes, pressed at press linear pressures of 47 and 157 kgf/mm, respectively, were designated as a negative electrode 37 and a negative electrode 48, respectively. A roll having a center line roughness Ra of 0.136 µm and a ten-point mean height Rz of 2.2 µm on the surface thereof was used, and the obtained electrode, pressed at press linear pressure of 67 kgf/mm, was designated as a negative electrode 39. Further, a roll having a center line roughness Ra of 0.175 µm and a ten-point mean height Rz of 1.8 µm on the surface thereof was used, and the obtained electrode, pressed at press linear pressure of 95 kgf/mm, was designated as a negative electrode 43.

### <Negative Electrodes 49 to 60>

The negative active material A5 described in Table 1 and PVDF as a binder were mixed in a ratio of 93 : 7, and to the resulting mixture, N-methylpyrrolidone (NMP) as a solvent was added to form a negative composite. The negative composite was applied onto a negative substrate of a Cu foil having a thickness of 8 µm. The negative substrate on which the negative composite was applied was pressed with a roll press machine having a roughened roll to perform compression forming of the negative composite layer and roughening of the negative current collecting foil. Water content was removed by vacuum-drying to form an electrode. A roll having a center line roughness Ra of 0.334 µm and a ten-point mean height Rz of 3.7 µm on the surface thereof was used, and the obtained electrodes, pressed at press linear pressures of 26, 41, 46, 56, 92, 123 and 136 kgf/mm, respectively, were designated as a negative electrode 49, a negative electrode 52, a negative electrode 53, a negative electrode 54, a negative electrode 57, a negative electrode59 and a negative electrode 60, respectively. A roll having a center line roughness Ra of 0.231 µm and a ten-point mean height Rz of 3.2 µm on the surface thereof was used, and the obtained electrodes, pressed at press linear pressures of 48, 52 and 92 kgf/mm, respectively, were designated as a negative electrode 50, a negative electrode 51 and a negative electrode 58, respectively. Further, a roll having a center line roughness Ra of 0.277 µm and a ten-point mean height Rz of 2.6 µm on the surface thereof was used, and the obtained electrodes, pressed at press linear pressures of 77 and 87 kgf/mm, respectively, were designated as a negative electrode 55 and a negative electrode 56, respectively.

### <Negative Electrodes 61 to 72>

The negative active material A6 described in Table 1 and PVDF as a binder were mixed in a ratio of 93 : 7, and to the resulting mixture, N-methylpyrrolidone (NMP) as a solvent was added to form a negative composite. The negative composite was applied onto a negative substrate of a Cu foil having a thickness of 8 µm. The negative substrate on which the negative composite was applied was pressed with a roll press machine having a roughened roll to perform compression forming of the negative composite layer and roughening of the negative current collecting foil. Water content was removed by vacuum-drying to form an electrode. A roll having a center line roughness Ra of 0.304 µm and a ten-point mean height Rz of 3.7 µm on the surface thereof was used, and the obtained electrodes, pressed at press linear pressures of 32, 46, 51, 61, 97, 128 and 141 kgf/mm, respectively, were designated as a negative electrode 61, a negative electrode 64, a negative electrode 65, a negative electrode 66, a negative electrode 69, a negative electrode71 and a negative electrode 72, respectively. A roll having a center line roughness Ra of 0.201 µm and a ten-point mean height Rz of 3.2 µm on the surface thereof was used, and the obtained electrodes, pressed at press linear pressures of 51, 55 and 95 kgf/mm, respectively, were designated as a negative electrode 62, a negative electrode 63 and a negative electrode 70, respectively. Further, a roll having a center line roughness Ra of 0.258 µm and a ten-point mean height Rz of 2.6 µm on the surface thereof was used, and the obtained electrodes, pressed at press linear pressures of 81 and 91 kgf/mm, respectively, were designated as a negative electrode 67 and a negative electrode 68, respectively.

Table 2 or Table 3 shows the results of measuring, with a laser microscope, the center line roughness Ra and the center line roughness Ra to the ten-point mean height Rz (Ra/Rz) on the surface of the negative substrate obtained by removing the composite layer of the pressed electrode of each of the negative electrodes 1 to 37, 39, 43, 48 to 72 in NMP by ultrasonic washing, and washing the electrode with acetone.

### <Positive Electrode>

LiNi_{1/3}Co_{1/3}Mn_{1/3}O₂ as a positive active material, acetylene black as a conductive additive and PVDF as a binder were mixed in a ratio of 91 : 4.5 : 4.5, and to the resulting mixture, N-methylpyrrolidone (NMP) as a solvent was added to form a positive composite. The positive composite was applied onto both surfaces of an Al foil, as the positive current collecting foil 13A, having a thickness of 13 µm, and compression-formed with a roll press. Water content was removed by vacuum-drying to form an electrode.

### <Separator>

A polyolefin microporous membrane having a width of 9.35 cm and a thickness of 21 µm was prepared as a separator.

### <Power Generating Element>

The negative electrode 11 and the positive electrode 13 are wound with the separator 12 interposed therebetween in a long cylindrical shape. Accordingly, the power generating element 10 was produced.

### <Assembling>

Current collecting portions were respectively attached to the negative electrode and the positive electrode of the power generating element 10. Thereafter, the power generating element 10 was placed in the main body 2a of the container 2. Then, the current collecting portions were respectively welded to the external terminals 21 of the lid portion 2b, and the lid portion 2b was attached to the main body 2a.

Then, an electrolyte solution was injected. The electrolyte solution was prepared by dissolving LiPF₆, so as to have a concentration of 1.2 mol/L, in a mixed solvent of propylene carbonate (PC), dimethyl carbonate (DMC) and ethylmethyl carbonate (EMC) in a volume ratio of 3 : 4 : 3. By undergoing the above-mentioned steps, lithium ion secondary batteries of Examples 1 to 24 and Comparative Examples 1 to 40 were produced.

### (Evaluation Methods)

Input power and retention rate of the lithium ion secondary batteries of Examples 1 to 24 and Comparative Examples 1 to 40 were evaluated in the following manner.

### (Input Power Evaluation Test)

First, the capacity verification test was performed. On each lithium ion secondary battery, the constant current constant voltage charge of a charge current of 5A current and 4.2 V voltage was performed for 3 hours in a constant-temperature oven at 25°C, and after the quiescence of 10 minutes, the constant current discharge was performed at a discharge current of 5A to 2.4 V, and thereby, the discharge capacity of the battery was measured. The battery after the capacity verification test was charged by 60% of the discharge capacity measured in the capacity verification test to adjust the SOC (state of charge) of the battery to 60%. The battery was held at -10°C for 4 hours. Thereafter the constant voltage charge of 4.3 V was performed for 1 second, and an initial input power at low temperatures was calculated from the current value 1 second later. The values of the initial input power of Examples 1 to 24 and Comparative Examples 2 to 40 at the time of taking the initial input power of Comparative Example 1 as 100 are shown in Table 2 or Table 3.

Next, on each lithium ion secondary battery, the constant current discharge was performed at a discharge current of 5A to 2.4 V in a constant-temperature oven at 25°C. The SOC of the battery was adjusted to 80% by charging 80% of the above-mentioned discharge capacity, and the battery was left standing at 65°C for 90 days. The input power of each lithium ion secondary battery after being left standing was measured in the same manner as described above. The values of the input power 90 days later of Examples 1 to 24 and Comparative Examples 1 to 40 at the time of taking the input power before being left standing (initial input power) of Comparative Example 1 as 100 are shown in Table 2 or Table 3.

### (Retention Rate)

The power retention rate of each lithium ion secondary battery was calculated from the equation, Retention Rate = (Initial input power)/(input power after being left standing) × 100. The calculated results are shown in Table 2 or Table 3.

### (Evaluation Results)

**[Table 2]**

| | Negative Electrode | Used Active Material | Current Collector Ra [µm] | Current Collector Ra/Rz | Input Power at 60% SOC at -10°C* | | Retention Rate % (vs. initial) |
|---|---|---|---|---|---|---|---|
| | | | | | Initial | After 90 Days of Storage Test at 80% SOC at 65°C | |
| Comparative Example 1 | Negative Electrode 1 | A1 | 0.181 | 0.081 | 100 | 70 | 70 |
| Comparative Example 2 | Negative Electrode2 | A1 | 0.205 | 0.072 | 100 | 70 | 70 |
| Comparative Example 3 | Negative Electrode3 | A1 | 0.257 | 0.069 | 99 | 72 | 72 |
| Comparative Example 4 | Negative Electrode4 | A1 | 0.291 | 0.089 | 100 | 73 | 74 |
| Comparative Example 5 | Negative Electrode5 | A1 | 0.323 | 0.086 | 99 | 74 | 74 |
| Comparative Example 6 | Negative Electrode6 | A1 | 0.382 | 0.083 | 100 | 75 | 75 |
| Comparative Example 7 | Negative Electrode7 | A1 | 0.455 | 0.106 | 100 | 75 | 75 |
| Comparative Example 8 | Negative Electrode8 | A1 | 0.514 | 0.100 | 100 | 74 | 74 |
| Comparative Example 9 | Negative Electrode9 | A1 | 0.594 | 0.089 | 100 | 74 | 74 |
| Comparative Example 10 | Negative Electrode10 | A1 | 0.493 | 0.072 | 100 | 75 | 75 |
| Comparative Example 11 | Negative Electrode11 | A1 | 0.781 | 0.085 | 99 | 71 | 71 |
| Comparative Example 12 | Negative Electrode12 | A1 | 0.856 | 0.083 | 99 | 73 | 74 |
| Comparative Example 13 | Negative Electrode13 | A2 | 0.181 | 0.081 | 126 | 85 | 67 |
| Comparative Example 14 | Negative Electrode14 | A2 | 0.205 | 0.072 | 126 | 85 | 68 |
| Comparative Example 15 | Negative Electrode15 | A2 | 0.257 | 0.069 | 127 | 81 | 64 |
| Comparative Example 16 | Negative Electrode16 | A2 | 0.291 | 0.089 | 127 | 84 | 66 |
| Comparative Example 17 | Negative Electrode17 | A2 | 0.323 | 0.086 | 126 | 87 | 69 |
| Comparative Example 18 | Negative Electrode18 | A2 | 0.382 | 0.083 | 127 | 87 | 69 |
| Comparative Example 19 | Negative Electrode19 | A2 | 0.455 | 0.106 | 127 | 84 | 66 |
| Comparative Example 20 | Negative Electrode20 | A2 | 0.514 | 0.100 | 127 | 86 | 68 |
| Comparative Example 21 | Negative Electrode21 | A2 | 0.594 | 0.089 | 126 | 87 | 69 |
| Comparative Example 22 | Negative Electrode22 | A2 | 0.493 | 0.072 | 126 | 82 | 65 |
| Comparative Example 23 | Negative Electrode23 | A2 | 0.781 | 0.085 | 126 | 84 | 67 |
| Comparative Example 24 | Negative Electrode24 | A2 | 0.856 | 0.083 | 126 | 72 | 58 |
| Comparative Example 25 | Negative Electrode25 | A3 | 0.181 | 0.081 | 128 | 72 | 57 |
| Comparative Example 26 | Negative Electrode27 | A3 | 0.257 | 0.069 | 128 | 69 | 54 |
| Comparative Example 27 | Negative Electrode31 | A3 | 0.455 | 0.106 | 128 | 66 | 52 |
| Comparative Example 28 | Negative Electrode36 | A3 | 0.856 | 0.083 | 128 | 78 | 61 |
| Comparative Example 29 | Negative Electrode37 | A4 | 0.181 | 0.081 | 127 | 75 | 59 |
| Comparative Example 30 | Negative Electrode39 | A4 | 0.257 | 0.069 | 128 | 73 | 57 |
| Comparative Example 31 | Negative Electrode43 | A4 | 0.455 | 0.106 | 130 | 63 | 49 |
| Comparative Example 32 | Negative Electrode48 | A4 | 0.856 | 0.083 | 128 | 76 | 60 |
| Comparative Example 33 | Negative Electrode49 | A5 | 0.181 | 0.081 | 119 | 62 | 52 |
| Comparative Example 34 | Negative Electrode51 | A5 | 0.257 | 0.069 | 120 | 64 | 54 |
| Comparative Example 35 | Negative Electrode55 | A5 | 0.455 | 0.106 | 120 | 58 | 48 |
| Comparative Example 36 | Negative Electrode60 | A5 | 0.856 | 0.083 | 119 | 64 | 53 |
| Comparative Example 37 | Negative Electrode61 | A6 | 0.181 | 0.081 | 124 | 72 | 59 |
| Comparative Example 38 | Negative Electrode63 | A6 | 0.257 | 0.069 | 123 | 72 | 58 |
| Comparative Example 39 | Negative Electrode67 | A6 | 0.455 | 0.106 | 124 | 65 | 52 |
| Comparative Example 40 | Negative Electrode72 | A6 | 0.856 | 0.083 | 124 | 69 | 56 |

| | | | | | | | |
|---|---|---|---|---|---|---|---|
| * The input power is a ratio at the time of taking a value of Comparative Example 1 at initial as 100. | | | | | | | |

**[Table 3]**

| | Battery | Used Active Material | Current Collector Ra [µm] | Current Collector Ra/Rz | Input Power at 60% SOC at -10°C* | | Retention Rate %(vs. initial) |
|---|---|---|---|---|---|---|---|
| | | | | | Initial | After 90 Days of Storage Test at 80% SOC at 65°C | |
| Example 1 | Negative Electrode26 | A3 | 0.205 | 0.072 | 129 | 110 | 85 |
| Example 2 | Negative Electrode28 | A3 | 0.291 | 0.089 | 129 | 109 | 85 |
| Example 3 | Negative Electrode29 | A3 | 0.323 | 0.086 | 129 | 112 | 86 |
| Example 4 | Negative Electrode30 | A3 | 0.382 | 0.083 | 128 | 110 | 86 |
| Example 5 | Negative Electrode32 | A3 | 0.514 | 0.100 | 127 | 100 | 79 |
| Example 6 | Negative Electrode33 | A3 | 0.594 | 0.089 | 128 | 116 | 90 |
| Example 7 | Negative Electrode34 | A3 | 0.493 | 0.072 | 129 | 106 | 82 |
| Example 8 | Negative Electrode35 | A3 | 0.781 | 0.085 | 129 | 109 | 84 |
| Example 9 | Negative Electrode50 | A5 | 0.205 | 0.072 | 120 | 97 | 81 |
| Example 10 | Negative Electrode52 | A5 | 0.291 | 0.089 | 120 | 95 | 80 |
| Example 11 | Negative Electrode53 | A5 | 0.323 | 0.086 | 119 | 103 | 86 |
| Example 12 | Negative Electrode54 | A5 | 0.382 | 0.083 | 120 | 98 | 82 |
| Example 13 | Negative Electrode56 | A5 | 0.514 | 0.100 | 120 | 110 | 91 |
| Example 14 | Negative Electrode57 | A5 | 0.594 | 0.089 | 120 | 105 | 88 |
| Example 15 | Negative Electrode58 | A5 | 0.493 | 0.072 | 120 | 107 | 89 |
| Example 16 | Negative Electrode59 | A5 | 0.781 | 0.085 | 120 | 102 | 85 |
| Example 17 | Negative Electrode62 | A6 | 0.205 | 0.072 | 124 | 105 | 84 |
| Example 18 | Negative Electrode64 | A6 | 0.291 | 0.089 | 123 | 107 | 87 |
| Example 19 | Negative Electrode65 | A6 | 0.323 | 0.086 | 124 | 105 | 84 |
| Example 20 | Negative Electrode66 | A6 | 0.382 | 0.083 | 124 | 101 | 81 |
| Example 21 | Negative Electrode68 | A6 | 0.514 | 0.100 | 124 | 110 | 89 |
| Example 22 | Negative Electrode69 | A6 | 0.594 | 0.089 | 124 | 115 | 93 |
| Example 23 | Negative Electrode70 | A6 | 0.493 | 0.072 | 124 | 105 | 85 |
| Example 24 | Negative Electrode71 | A6 | 0.781 | 0.085 | 124 | 107 | 86 |

| | | | | | | | |
|---|---|---|---|---|---|---|---|
| * The input power is a ratio at the time of taking a value of Comparative Example 1 at initial as 100. | | | | | | | |

As shown in Table 2 and Table 3, the lithium ion secondary batteries of Examples 1 to 24 had higher input power after being left standing at high temperatures for 90 days than those of Comparative Examples 1 to 40. This revealed that the reduction of input power in the high temperature storage test can be suppressed by controlling the D10 of the negative active material to be 1.3 µm or more, the D90 of the negative active material to be 8.9 µm or less, and the surface of the negative substrate to have a center line roughness Ra of 0.205 µm or more and 0.781 µm or less and a center line roughness Ra to a ten-point mean height Rz of 0.072 or more and 0.100 or less.

Further, since the retention rates of the lithium ion secondary batteries of Examples 1 to 24 are high, it is considered that adhesion properties between the active material and the negative current collecting foil 11A could be enhanced.

It was verified from the above description that according to the present example, the reduction of input power in using at high temperatures can be suppressed by controlling the D10 of the negative active material to be 1.3 µm or more, the D90 of the negative active material to be 8.9 µm or less, and the surface of the negative substrate to have a center line roughness Ra of 0.205 µm or more and 0.781 µm or less and a center line roughness Ra to a ten-point mean height Rz of 0.072 or more and 0.100 or less.

As described above, the embodiments and examples of the present invention have been described, and appropriate combinations of the characteristics of these embodiments and examples are considered from the beginning.

In the examples, the case of a winding type power generating element has been described, but it is needless to say that the problems of a lamination type power generating element are also solved by the embodiments of the present invention.

Further, it should be considered that the embodiments and examples disclosed herein are illustrative in all respects and are not restrictive. The scope of the present invention is defined by the claims rather than by the above-mentioned embodiments and examples, and all modifications and variations which fall within the scope of the claims, or equivalence of the scope of the claims are therefore intended to be included.

## Claims

1. An energy storage device (1) comprising:
a negative electrode (11) including a negative substrate (11A) having a surface (11A1, 11A2), and a negative composite layer (11B) formed on the surface (11A1, 11A2) of the negative substrate (11A) and including a negative active material;
a positive electrode (13) including a positive substrate (13A), and a positive composite layer (13B) formed on the positive substrate (13A) and including a positive active material; and
a separator (12) placed between the positive electrode (13) and the negative electrode (11),
wherein 10% cumulative diameter D10 in the particle size distribution of the negative active material on a volume basis is 1.3 µm or more, and 90% cumulative diameter D90 in the particle size distribution of the negative active material on a volume basis is 8.9 µm or less, and
the surface (11A1, 11A2) of the negative substrate (11A) has a center line roughness Ra of 0.205 µm or more and 0.781 µm or less, and has a center line roughness Ra to a ten-point mean height Rz of 0.072 or more and 0.100 or less.

2. The energy storage device (1) according to claim 1, wherein the center line roughness Ra is 0.291 µm or more and 0.594 µm or less.

3. The energy storage device (1) according to claim 1 or 2, wherein the center line roughness Ra is 0.323 µm or more and 0.514 µm or less.

4. The energy storage device (1) according to any one of claims 1 to 3, wherein the center line roughness Ra to the ten-point mean height Rz (Ra/Rz) is 0.081 or more and 0.089 or less.

5. The energy storage device (1) according to any one of claims 1 to 4, wherein the center line roughness Ra to the ten-point mean height Rz (Ra/Rz) is 0.083 or more and 0.086 or less.

6. The energy storage device (1) according to any one of claims 1 to 5, wherein the 10% cumulative diameter D10 in the particle size distribution of the negative active material on a volume basis is 1.3 µm or more, and the 90% cumulative diameter D90 in the particle size distribution of the negative active material on a volume basis is 4.5 µm or less.

7. The energy storage device (1) according to any one of claims 1 to 6, wherein the 10% cumulative diameter D10 in the particle size distribution of the negative active material on a volume basis is 1.6 µm or more, and the 90% cumulative diameter D90 in the particle size distribution of the negative active material on a volume basis is 3.6 µm or less.

8. The energy storage device (1) according to any one of claims 1 to 7, wherein the negative active material contains hard carbon.

9. The energy storage device (1) according to any one of claims 1 to 8, wherein the 10% cumulative diameter D10 in the particle size distribution of the negative active material on a volume basis is 8.9 µm or less.

10. The energy storage device (1) according to any one of claims 1 to 9, wherein the 10% cumulative diameter D10 in the particle size distribution of the negative active material on a volume basis is 4.3 µm or less.

11. The energy storage device (1) according to any one of claims 1 to 10, wherein the 90% cumulative diameter D90 in the particle size distribution of the negative active material on a volume basis is 1.3 µm or more.

12. The energy storage device (1) according to any one of claims 1 to 11, wherein the 90% cumulative diameter D90 in the particle size distribution of the negative active material on a volume basis is 3.6 µm or more.

13. An energy storage module (101) comprising the energy storage device (1) according to any one of claims 1 to 12.

## Patentansprüche

1. Energiespeichervorrichtung (1), umfassend:
eine negative Elektrode (11), die ein negatives Substrat (11A) mit einer Fläche (11A1, 11A2) und eine negative Verbundschicht (11B), die auf der Fläche (11A1, 11A2) des negativen Substrats (11A) gebildet ist, aufweist und ein negatives aktives Material aufweist,
eine positive Elektrode (13), die ein positives Substrat (13A) und eine positive Verbundschicht (13B), die auf dem positiven Substrat (13A) gebildet ist, aufweist und ein positives aktives Material aufweist, und
einen Separator (12), der zwischen der positiven Elektrode (13) und der negativen Elektrode (11) platziert ist,
wobei 10 % eines kumulativen Durchmessers D10 in der Teilchengrößenverteilung des negativen aktiven Materials auf Volumenbasis 1,3 µm oder mehr beträgt und 90 % eines kumulativen Durchmessers in der Teilchengrößenverteilung des negativen aktiven Materials auf Volumenbasis 8,9 µm oder weniger beträgt und
die Fläche (11A1, 11A2) des negativen Substrats (11A) eine Mittellinien-Rauhigkeit Ra von 0,205 µm oder mehr und 0,781 µm oder weniger und eine Mittellinien-Rauhigkeit Ra zu einer mittleren Zehn-Punkt-Höhe Rz von 0,072 oder mehr und 0,100 oder weniger hat.

2. Energiespeichervorrichtung (1) nach Anspruch 1, wobei die Mittellinien-Rauhigkeit Ra 0,291 µm oder mehr und 0,594 µm oder weniger beträgt.

3. Energiespeichervorrichtung (1) nach Anspruch 1 oder 2, wobei die Mittellinien-Rauhigkeit Ra 0,323 µm oder mehr und 0,514 µm oder weniger beträgt.

4. Energiespeichervorrichtung (1) nach einem der Ansprüche 1 bis 3, wobei die Mittellinien-Rauhigkeit Ra zu der mittleren Zehn-Punkt-Höhe Rz (Ra/Rz) 0,081 oder mehr und 0,089 oder weniger beträgt.

5. Energiespeichervorrichtung (1) nach einem der Ansprüche 1 bis 4, wobei die Mittellinien-Rauhigkeit Ra zu der mittleren Zehn-Punkt-Höhe Rz (Ra/Rz) 0,083 oder mehr und 0,086 oder weniger beträgt.

6. Energiespeichervorrichtung (1) nach einem der Ansprüche 1 bis 5, wobei die 10 % von kumulativem Durchmesser D10 in der Teilchengrößenverteilung des negativen aktiven Materials auf Volumenbasis 1,3 µm oder mehr beträgt und die 90 % von kumulativem Durchmesser D90 in der Teilchengrößenverteilung des negativen aktiven Materials auf Volumenbasis 4,5 µm oder weniger beträgt.

7. Energiespeichervorrichtung (1) nach einem der Ansprüche 1 bis 6, wobei die 10 % von kumulativem Durchmesser D10 in der Teilchengrößenverteilung des negativen aktiven Materials auf Volumenbasis 1,6 µm oder mehr beträgt und die 90 % von kumulativem Durchmesser D90 in der Teilchengrößenverteilung des negativen aktiven Materials auf Volumenbasis 3,6 µm oder weniger beträgt.

8. Energiespeichervorrichtung (1) nach einem der Ansprüche 1 bis 7, wobei das negative aktive Material harten Kohlenstoff enthält.

9. Energiespeichervorrichtung (1) nach einem der Ansprüche 1 bis 8, wobei die 10 % von kumulativem Durchmesser D10 in der Teilchengrößenverteilung des negativen aktiven Materials auf Volumenbasis 8,9 µm oder weniger beträgt.

10. Energiespeichervorrichtung (1) nach einem der Ansprüche 1 bis 9, wobei die 10 % von kumulativem Durchmesser D10 in der Teilchengrößenverteilung des negativen aktiven Materials auf Volumenbasis 4,3 µm oder weniger beträgt.

11. Energiespeichervorrichtung (1) nach einem der Ansprüche 1 bis 10, wobei die 90 % von kumulativem Durchmesser D90 in der Teilchengrößenverteilung des negativen aktiven Materials auf Volumenbasis 1,3 µm oder mehr beträgt.

12. Energiespeichervorrichtung (1) nach einem der Ansprüche 1 bis 11, wobei die 90 % von kumulativem Durchmesser D90 in der Teilchengrößenverteilung des negativen aktiven Materials auf Volumenbasis 3,6 µm oder mehr beträgt.

13. Energiespeichermodul (101), umfassend die Energiespeichervorrichtung (1) nach einem der Ansprüche 1 bis 12.

## Revendications

1. Dispositif de stockage d'énergie (1) comprenant :
une électrode négative (11) incluant un substrat négatif (11A) ayant une surface (11A1, 11A2), et une couche composite négative (11B) formée sur la surface (11A1, 11A2) du substrat négatif (11A) et incluant une matière active négative ;
une électrode positive (13) incluant un substrat positif (13A), et une couche composite positive (13B) formée sur le substrat positif (13A) et incluant une matière active positive ; et
un séparateur (12) placé entre l'électrode positive (13) et l'électrode négative (11),
dans lequel le diamètre cumulé à 10 % D10 dans la distribution granulométrique de la matière active négative en volume est de 1,3 µm ou plus, et le diamètre cumulé à 90 % D90 dans la distribution granulométrique de la matière active négative en volume est de 8,9 µm ou moins, et
la surface (11A1, 11A2) du substrat négatif (11A) a une rugosité à la ligne centrale Ra de 0,205 µm ou plus et 0,781 µm ou moins, et a un rapport entre la rugosité à la ligne centrale Ra et une hauteur moyenne sur dix points Rz de 0,072 ou plus et 0,100 ou moins.

2. Dispositif de stockage d'énergie (1) selon la revendication 1, dans lequel la rugosité à la ligne centrale Ra est de 0,291 µm ou plus et de 0,594 µm ou moins.

3. Dispositif de stockage d'énergie (1) selon la revendication 1 ou 2, dans lequel la rugosité à la ligne centrale Ra est de 0,323 µm ou plus et de 0,514 µm ou moins.

4. Dispositif de stockage d'énergie (1) selon l'une quelconque des revendications 1 à 3, dans lequel le rapport entre la rugosité à la ligne centrale Ra et la hauteur moyenne sur dix points Rz (Ra/Rz) est de 0,081 ou plus et de 0,089 ou moins.

5. Dispositif de stockage d'énergie (1) selon l'une quelconque des revendications 1 à 4, dans lequel le rapport entre la rugosité à la ligne centrale Ra et la hauteur moyenne en dix points Rz (Ra/Rz) est de 0,083 ou plus et de 0,086 ou moins.

6. Dispositif de stockage d'énergie (1) selon l'une quelconque des revendications 1 à 5,
dans lequel le diamètre cumulé à 10 % D10 dans la distribution granulométrique de la matière active négative en volume est de 1,3 µm ou plus, et le diamètre cumulé à 90 % D90 dans la distribution granulométrique de la matière active négative en volume est de 4,5 µm ou moins.

7. Dispositif de stockage d'énergie (1) selon l'une quelconque des revendications 1 à 6, dans lequel le diamètre cumulé à 10 % D10 dans la distribution granulométrique de la matière active négative en volume est de 1,6 µm ou plus, et le diamètre cumulé à 90 % D90 dans la distribution granulométrique de la matière active négative en volume est de 3,6 µm ou moins.

8. Dispositif de stockage d'énergie (1) selon l'une quelconque des revendications 1 à 7, dans lequel la matière active négative contient du carbone dur.

9. Dispositif de stockage d'énergie (1) selon l'une quelconque des revendications 1 à 8, dans lequel le diamètre cumulé à 10 % D10 dans la distribution granulométrique de la matière active négative en volume est de 8,9 µm ou moins.

10. Dispositif de stockage d'énergie (1) selon l'une quelconque des revendications 1 à 9, dans lequel le diamètre cumulé à 10 % D10 dans la distribution granulométrique de la matière active négative en volume est de 4,3 µm ou moins.

11. Dispositif de stockage d'énergie (1) selon l'une quelconque des revendications 1 à 10, dans lequel le diamètre cumulé à 90 % D90 dans la distribution granulométrique de la matière active négative en volume est de 1,3 µm ou plus.

12. Dispositif de stockage d'énergie (1) selon l'une quelconque des revendications 1 à 11, dans lequel le diamètre cumulé à 90 % D90 dans la distribution granulométrique de la matière active négative en volume est de 3,6 µm ou plus.

13. Module de stockage d'énergie (101) comprenant le dispositif de stockage d'énergie (1) selon l'une quelconque des revendications 1 à 12.
